Europäisches Patentamt

European Patent Office

Office européen des brevets

(11) Veröffentlichungsnummer: **0 131 135**

A2

(12) **EUROPÄISCHE PATENTANMELDUNG**

(21) Anmeldenummer: **84106257.3**

(22) Anmeldetag: **01.06.84**

(51) Int. Cl.⁴: **F 16 H 1/445**

(30) Priorität: **13.06.83 US 503970**

(43) Veröffentlichungstag der Anmeldung:
**16.01.85 Patentblatt 85/3**

(84) Benannte Vertragsstaaten:
**DE FR GB**

(71) Anmelder: **DEERE & COMPANY**
**1 John Deere Road**
**Moline Illinois 61265(US)**

(72) Erfinder: **Newendorp, Bruce Craig**
**1021 Calumett Drive**
**Cedar Falls Iowa 50613(US)**

(72) Erfinder: **Sturtz, Terry Lee**
**5444 Tucson Drive**
**Waterloo Iowa 50702(US)**

(72) Erfinder: **Anderson, Lawrence V.**
**2604 Loma**
**Cedar Falls Iowa 50613(US)**

(74) Vertreter: **Gramm, Werner, Dipl.-Ing.**
**Patentanwälte Gramm + Lins Theodor-Heuss-Strasse 2**
**D-3300 Braunschweig(DE)**

(54) **Regelsystem zum Sperren eines Ausgleichsgetriebes.**

(57) Ein Regelsystem zum Sperren eines Ausgleichsgetriebes (10, 12) steuert eine hydraulisch betätigte Differentialsperre (14, 16) über ein Solenoidventil (18, 24). Die Erregung dieses Solenoidventils (18, 24) erfolgt über einen Steuerkreis (30), der ein normalerweise geschlossenes Stromstoßrelais (32), ein normalerweise geöffnetes Relais (34) sowie zwei manuell betätigbare, kurzzeitige Kontaktschalter (46, 48) aufweist. Der Steuerkreis (30) umfaßt ferner zwei von einem Lenkungsventil (54) betätigte Schalter (50, 52), die parallel zueinander liegen und an das normalerweise geschlossene Relais (32) angeschlossen sind. Jeder lenkungsbetätigte Schalter (50, 52) weist einen leitenden Kolben (66) auf, der immer dann durch das Gehäuse (58) des Lenkungs-ventils (54) geerdet wird, wenn der Ventilschieber (56) gegen das Ende der Ventilbohrung verschoben wird und hier einen druckelastischen, elektrisch isolierenden O-Ring (80) zusammendrückt, der zwischen Kolben (66) und Ventilschieber (56) angeordnet ist.

*FIG. I*

0131135

Regelsystem zum Sperren eines Ausgleichsgetriebes

Die Erfindung betrifft ein Regelsystem zum Sperren eines Ausgleichsgetriebes in einem Fahrzeug mit einem ein Lenkungsventil aufweisenden hydraulischen Lenkungssystem, zumindest einer
über ein Ausgleichsgetriebe angetriebenen Achse und einer Differentialsperre zum Sperren und Entsperren des Ausgleichsgetriebes.

Es ist bekannt, bestimmte Fahrzeuge, z. B. in der Landwirtschaft eingesetzte Traktoren, mit Ausgleichsgetrieben zu versehen, die wahlweise gesperrt oder freigegeben werden können.
Es sind Systeme zur Steuerung der Differentialsperren bekannt,
bei denen ein solenoidbetätigtes Differentialsperren-Steuerventil über einen einzigen, manuell betätigten Fußbodenschalter gesteuert wird. Bei diesem System muß aber der Fahrer des
Fahrzeuges ständig den Bodenschalter niederdrücken, um das
Ausgleichsgetriebe gesperrt zu halten. Sowohl bei Breitspur-
Schleppern als auch bei vierradangetriebenen Traktoren mit Differentialsperren kann ein gesperrtes Ausgleichsgetriebe die
Lenkung des Schleppers stören. Eine bei Breitspur-Schleppern
anwendbare Lösung dieses Problems besteht darin, das Ausgleichsgetriebe in Abhängigkeit von der Betätigung der linken oder rechten Bremse zu entsperren, da die Bremsen häufig zur Unterstützung beim Drehen des Breitspur-Schleppers benutzt werden.
Ein derartiges System ist beschrieben im US-Patent 2,874,790.
In dieser Vorveröffentlichung ist ferner eine andere Lösung des
genannten Problems offenbart, wonach die Steuerung der Differentialsperre in Abhängigkeit eines Relativwinkels zwischen mechanischen Teilen der Schleppersteuerung erfolgt. Jedoch weist
dieses System einen Nachteil auf:

Es ist häufig erforderlich, mit einem landwirtschaftlichen
Schlepper an einem Hang zu arbeiten, wobei das vordere Ende des
Schleppers ständig unter einem leichten Winkel hangaufwärts gehalten werden muß, um der Tendenz des Traktors entgegenzuwirken,
hangabwärts zu rutschen. In einer derartigen Situation, bei der
es nur eines geringen Lenkaufwandes bedarf, um der hangabwärts
gerichteten Bewegung entgegenzuwirken, wäre es wünschenswert,
das Ausgleichsgetriebe gesperrt zu halten. Bei einem vom Lenkwinkel abhängigen System gemäß US-Patent 2,874,790 erfolgt jedoch automatisch die Entsperrung des Ausgleichsgetriebes bei
der geschilderten Hangsituation, sobald der Lenkwinkel den bestimmten Winkel überschreitet, oberhalb dessen das Ausgleichsgetriebe gesperrt ist, und zwar jeweils unabhängig davon, ob
diese Entsperrung wünschenswert oder notwendig ist.

Der Erfindung liegt die Aufgabe zugrunde, ein auf die Lenkung
des Fahrzeuges ansprechendes Regelsystem zum Sperren eines Ausgleichsgetriebes gemäß der eingangs beschriebenen Ausführungsform zu entwickeln, das das Ausgleichsgetriebe nur dann entsperrt, wenn ein vorgegebener Lenkungsaufwand erforderlich ist.

Diese Aufgabe wird gemäß der Erfindung dadurch gelöst, daß die
Steuerung der Differentialsperre zum Sperren und Entsperren des
Ausgleichsgetriebes über manuell zu betätigende Schalter erfolgt,
die ε die Differentialsperre angeschlossen sind, und daß an
die Differentialsperre sowie das Lenkungsventil eine auf die
Lenkung ansprechende Schalteinrichtung angeschlossen ist, die in Abhängigkeit einer vorgegebenen Betätigung des Lenkungsventils die Differentialsperre beaufschlagt, um das Ausgleichsgetriebe zu entsperren, wenn es gesperrt ist.

Ein mit einem derartigen Regelsystem ausgerüsteter Schlepper kann am Hang arbeiten ohne unerwünschte Entsperrung des Ausgleichsgetriebes. Das neue Regelsystem ist nicht mehr nur noch von der Winkelstellung zwischen bestimmten Lenkungsteilen abhängig.

Es ist zweckmäßig, wenn ein normalerweise geöffnetes Stromstoßrelais an die Differentialsperre angeschlossen und ein normalerweise geschlossenes Relais zwischen das normalerweise geöffnete Stromstoßrelais und die lenkungsbetätigte Schalteinrichtung geschaltet sind.

Die hydraulisch betätigten Differentialsperren werden durch ein Solenoidventil gesteuert. Die Erregung dieses Solenoidventils erfolgt über einen Steuerkreis, der die beiden o. g. Relais sowie die beiden ebenfalls vorstehend genannten, vom Fahrer zu betätigenden kurzzeitigen Kontaktschalter umfaßt. Der Steuerkreis weist ferner zwei durch das Lenkungsventil betätigte Schalter auf, die parallel zueinander liegen und an das normalerweise geschlossene Relais angeschlossen sind. Jeder lenkungsbetätigte Schalter weist einen leitenden Kolben auf, der immer dann über das Gehäuse des Lenkungsventils geerdet wird, wenn ein Ventilschieber des Lenkungsventils gegen das eine Ende einer Ventilbohrung verschoben wird und dort einen druckelastischen, elektrisch isolierenden O-Ring zusammendrückt, der zwischen Kolben und Ventilschieber angeordnet ist.

Weitere Merkmale der Erfindung sind Gegenstand der Unteransprüche und werden anhand eines Ausführungsbeispiels näher erläutert.

In der Zeichnung ist eine als Beispiel dienende Ausführungsform der Erfindung dargestellt. Es zeigen:

Figur 1 - in vereinfachter Darstellung ein schematisches Diagramm eines Regelsystems zum Sperren eines Ausgleichsgetriebes und

Figur 2 - im Ausschnitt einen Längsschnitt durch einen lenkungsbetätigten Schalter.

Ein mit einem Gelenk versehener vierradangetriebener Schlepper weist ein übliches vorderes und hinteres Ausgleichsgetriebe 10,12 auf, die durch übliche, hydraulisch betätigte Differentialsperren 14,16 gesperrt oder entsperrt werden können. Diese Differentialsperren 14,16 werden durch ein Zwei-Wege-Zwei-Positions-Steuerventil 18 unter Druck gesetzt und gesperrt bzw. drucklos gemacht und entsperrt, wobei das genannte Ventil 18 die Flüssigkeitsverbindung zwischen den Differentialsperren 14, 16, einer Pumpe 20 und eines Reservoirs 22 steuert. Das Ventil 18 wird seinerseits gesteuert durch ein Solenois 24, dessen Erregung über einen Steuerkreis 30 erfolgt.

Der Steuerkreis 30 umfaßt ein normalerweise geschlossenes Relais 32 und ein normalerweise geöffnetes Stromstoßrelais 34. Das Relais 32 umfaßt einen normalerweise geschlossenen Schalter 36, der dann geöffnet wird, wenn eine Spule 38 erregt wird. Das Relais 34 umfaßt einen normalerweise geöffneten Schalter 40, der dann in Schließstellung bezogen wird, wenn eine Spule 42 erregt wird. Die eine Seite des Schalters 40 ist an das Solenoid 24, über die Spule 42 und eine Anzeigelampe 44 an eine Erde sowie an die eine Seite eines normalerweise geöffneten kurzzeitigen Kontaktschalters 46 angeschlossen. Die andere Seite des Schalters 40 ist an die eine Seite des Schalters 36 sowie an die andere Seite des Schalters 46 angeschlossen. Die andere Seite des Schalters 36 ist an eine +12-Volt-Spannungsquelle bzw. Batterie 37 und an die eine Seite der Spule 38 angeschlossen. Die andere Seite der Spule 38 ist über einen weiteren normalerweise geöffneten kurzzeitigen Kontaktschalter 48 und über parallel liegende Schalter 50,52 geerdet, die von einem üblichen Lenkungssteuerventil 54 mit einem Ventilschieber getätigt werden. Das Lenkungssteuerventil 54 arbeitet in Abhängigkeit von einer üblichen Dosierpumpe 53, die durch ein Lenkrad 55 gesteuert ist. Anzeigelampe 44 und Schalter 46,48 sind vorzugsweise in der nicht dargestellten Fahrerkabine angeordnet.

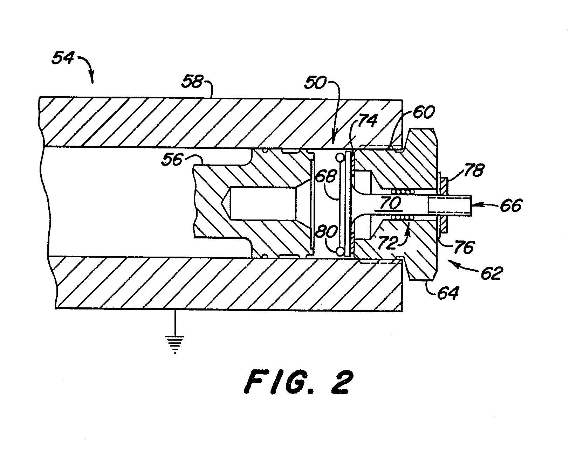

Gemäß Figur 2 weist das übliche Lenkungsventil 54 einen Schieber 56 auf, der innerhalb eines geerdeten Gehäuses 58 von einer Seite zur anderen verschoben wird in Abhängigkeit der von der Lenkungsdosierpumpe 53 verdrängten Ölmenge. Das Gehäuse 58 weist an seinen beiden Enden eine mit Innengewinde versehene Bohrung 60 auf, von denen in Figur 2 nur eine dargestellt ist. In diese Bohrung 60 ist ein Schaltmodul 62 eingeschraubt, das eine mit Außengewinde versehene Buchse 64 aufweist, die in die Bohrung 60 geschraubt ist. In dieser Buchse 64 ist ein leitender Kolben 66 mit einem die eine Stirnseite bildenden Flansch 68 und einem Schaft 70 angeordnet. Der Kolben 66 ist mit der niedrigen Spannungsseite der Spule 38 elektrisch verbunden. Der Schaft 70 ist innerhalb der Buchse 64 durch mehrere elektrisch isolierende O-Ringe 72 elastisch gehalten. Der Kolben 66 ist gegenüber der Buchse 64 ebenfalls elektrisch isoliert durch eine Isolierscheibe 74, die zwischen dem Flansch 68 und der ringförmigen Stirnfläche der Buchse 74 angeordnet ist, sowie durch eine Isolierscheibe 76, die zwischen eine Haltemutter 78 und der äußeren Stirnfläche der Buchse 64 angeordnet ist. Die äußere Ringkante des Flansches 68 ist mit einer Nut versehen, in die ein druckelastischer, elektrisch isolierender O-Ring 80 eingesetzt ist. Wird der Ventilschieber 56 mit ausreichender Kraft gegen das Schaltmodul 62 gedrückt, wird der O-Ring 80 zusammengedrückt und erlaubt einen elektrischen Kontakt zwischen Ventilschieber 56 und Kolben 66, wodurch der Kolben 66 über Ventilschieber 56 und Gehäuse 58 geerdet wird.

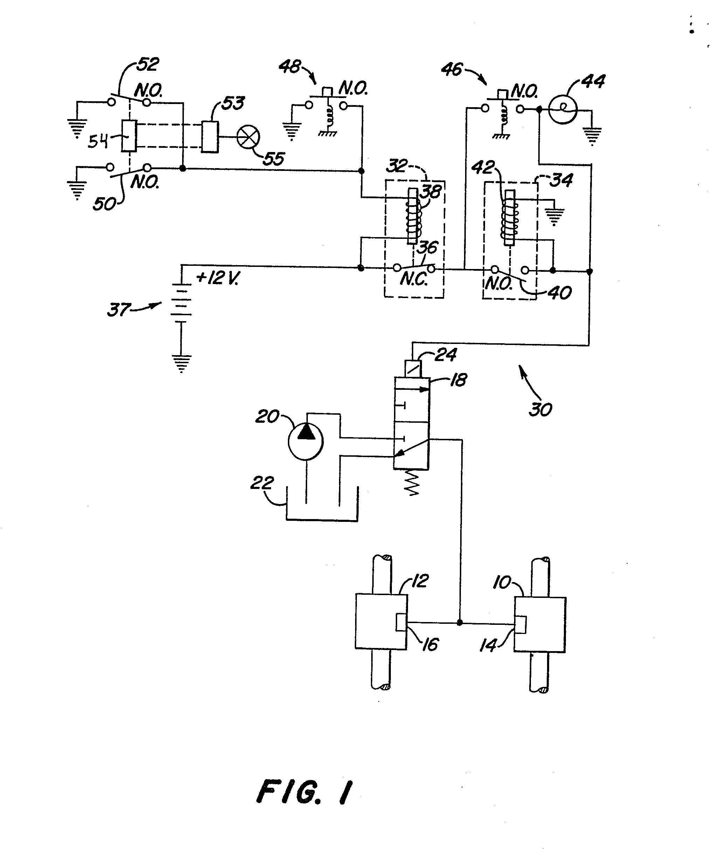

Eine derartige Anordnung ist an beiden Enden des Lenkungsventils 54 vorgesehen und umfaßt somit die Schalter 50,52, die in Figur 1 schematisch dargestellt sind.

Das Regelsystem arbeitet wie folgt: Unter der Annahme, daß das Relais 32 anfangs geschlossen und das Relais 34 anfangs geöffnet sind, wie es in Figur 1 dargestellt ist, ist das Solenoid 24 stromlos; die Ausgleichsgetriebe 10,12 sind dann entsperrt. Zur Sperrung dieser Ausgleichsgetriebe kann der Fahrer kurzzeitig den Schalter 46 schließen. Dies erregt die Anzeigelampe 44 und das Solenoid 24 und führt zur Sperrung der Ausgleichsgetriebe. Außerdem wird die Relaisspule 42 erregt und schließt das Relais 34, so daß die Spule 24 über die Relais 36 und 34 auch dann erregt bleibt, wenn der Schalter 46 losgelassen wird und wieder öffnet.

Kann der Schlepper während der Arbeit mangels Lenkungskapazität nicht mehr ausreichend um sein Mittelgelenk verschwenkt werden, wird die auf das Lenkrad 55 aufgebrachte Kraft schließlich groß genug, um durch den Pilotdruck im Ventil 54 den Ventilschieber 56 gegen den Kolben 66 zu schieben und dabei den O-Ring 80 zusammenzudrücken, bis ein elektrischer Kontakt zwischen Ventilschieber 56 und der Stirnfläche des Kolbens 66 hergestellt ist. Dieser Kontakt schließt einen Schaltkreis zwischen der Niederspannungsseite der Spule 38 und der Erdung, so daß die Spule 38 erregt wird und das Relais 32 öffnet. Dadurch wird die Batterie 37 vom Solenoid 24 getrennt, das dadurch stromlos wird und die Ausgleichsgetriebe 10 und 12 entsperrt. Außerdem wird hierdurch die Relaisspule 42 stromlos, so daß das Relais 34 öffnet. Wird die Lenkungskraft verringert und öffnet Schalter 50 oder 52 erneut, um das Relais 32 zu schließen, bleibt das Relais 34 geöffnet, so daß die Ausgleichsgetriebe entsperrt bleiben. Alternativ können die Ausgleichsgetriebe manuell entsperrt werden durch kurzzeitiges Schließen des Schalters 48, der die Relais 32 und 34 in gleicher Weise beaufschlagt wie die Schalter 50 und 52. Ist das Relais 34 erst einmal geöffnet, dann kann das Ausgleichsgetriebe wieder gesperrt werden durch Schließen des Schalters
46, wie vorstehend beschrieben wurde.

Gr/bk

Patentansprüche:

1. Regelsystem zum Sperren eines Ausgleichsgetriebes (10,12) in einem Fahrzeug mit einem ein Lenkungsventil (54) aufweisenden hydraulischen Lenkungssystem, zumindest einer über ein Ausgleichsgetriebe (10,12) angetriebenen Achse und einer Differentialsperre (14,16) zum Sperren und Entsperren des Ausgleichsgetriebes (10,12),
d a d u r c h   g e k e n n z e i c h n e t ,   daß die Steuerung der Differentialsperre (14,16) zum Sperren und Entsperren des Ausgleichsgetriebes (10,12) über manuell zu betätigende Schalter (46,48) erfolgt, die an die Differentialsperre (14,16) angeschlossen sind, und daß an die Differentialsperre (14,16) sowie das Lenkungsventil (54) eine auf die Lenkung ansprechende Schalteinrichtung (50,52) angeschlossen ist, die in Abhängigkeit einer vorgegebenen Betätigung des Lenkungsventils (54) die Differentialsperre (14,16) beaufschlagt, um das Ausgleichsgetriebe (10,12) zu entsperren, wenn es gesperrt ist.

2. Regelsystem nach Anspruch 1, dadurch gekennzeichnet, daß ein normalerweise geöffnetes Stromstoßrelais (34) an die Differentialsperre (14,16) angeschlossen und ein normalerweise geschlossenes Relais (32) zwischen das normalerweise
geöffnete Stromstoßrelais (34) und die lenkungsbetätigte
Schalteinrichtung (50,52) geschaltet sind.

3. Regelsystem nach Anspruch 2, gekennzeichnet durch folgende
   Merkmale:

   a) Die beiden Relais (32,34) weisen je einen spulenbetätigten
      Relaisschalter (36,40) auf, die in Reihe zwischen einer
      Spannungsquelle (37) und der Differentialsperre (14,16)
      liegen;

   b) der normalerweise geöffnete Relaisschalter (40) ist mit
      seiner einen Seite an die Differentialsperre (14,16), an
      eine Erde sowie an eine erste Relaisspule (42) angeschlossen;

   c) der normalerweise geschlossene Relaisschalter (36) ist
      mit seiner einen Seite an die andere Seite des normalerweise geöffneten Relaisschalters (40) und mit seiner anderen Seite an die Spannungsquelle (37) sowie über eine
      zweite Relaisspule (38) und die lenkungsbetätigte Schalteinrichtung (50,52) an eine Erde angeschlossen; und

   d) die manuell zu betätigenden Schalter umfassen einen er-
      sten, normalerweise geöffneten kurzzeitigen Kontaktschal-
      ter (48), der zwischen die zweite Relaisspule (38) und eine Erde geschaltet ist, sowie einen zweiten, normalerweise geöffneten kurzzeitigen Kontaktschalter (46), der parallel zum normalerweise geöffneten Relaisschalter (40) liegt.

4. Regelsystem nach Anspruch 1, 2 oder 3, dadurch gekennzeichnet, daß die lenkungsbetätigte Schalteinrichtung (50,52) zwei
   identische, parallel liegende Schalter umfaßt, die an sich
   gegenüberliegenden Enden des Lenkungsventils (54) angebracht
   sind.

5. Regelsystem nach einem der vorhergehenden Ansprüche, gekennzeichnet durch folgende Merkmale:

   a) Das Lenkungsventil (54) weist ein leitendes Gehäuse (58)
      auf, das geerdet ist und eine Bohrung hat, in der ein lei-
      tender Ventilschieber (56) verschiebbar angeordnet ist;

   b) die lenkungsbetätigte Schalteinrichtung (50,52) weist einen leitenden Kolben (66) auf, der in einem Ende des Ventilgehäuses (58) gelagert und diesem gegenüber durch Isoliermittel (72,74,76) elektrisch isoliert ist; und

   c) der Kolben (66) ist mit der Differentialsperre (14,16)
      elektrisch verbunden und kann mit seiner Stirnfläche (68)
      den Ventilschieber (56) beaufschlagen und dadurch den
      Schaltkreis zwischen der Differentialsperre (14,16) und
      der Erde schließen und so das Ausgleichsgetriebe (10,12)
      entsperren.

6. Regelsystem nach Anspruch 5, dadurch gekennzeichnet, daß
   zwischen Ventilschieber (56) und Kolben (66) ein druckelastisches Isolierglied (80) angeordnet ist, das eine Anlage von
   Ventilschieber (56) und Kolben (66) solange verhindert, bis
   der Ventilschieber (56) verschoben wird, um das druckelastische Isolierglied (80) um einen vorgegebenen Betrag zu deformieren.

7. Regelsystem nach Anspruch 5 oder 6, dadurch gekennzeichnet,
   daß der Kolben (66) mit der zweiten Relaisspule (38) elektrisch verbunden ist.

Gr/bk

1/2

FIG. 1

2/2

**FIG. 2**